# EUROPEAN PATENT SPECIFICATION

(11) **EP 4 518 296 B1**
(45) Date of publication and mention of the grant of the patent: **27.08.2025**
(21) Application number: 24194317.4
(22) Date of filing: 13.08.2024
(51) Int. Cl.: H04L 67/56, H04L 67/567, H04L 69/18

(54) **SERVICE PROXY DEVICE, SERVICE PROVIDING SYSTEM, AND SERVICE PROXY METHOD**
DIENST-PROXY-EINRICHTUNG, DIENSTBEREITSTELLUNGSSYSTEM UND DIENST-PROXY-VERFAHREN
DISPOSITIF MANDATAIRE DE SERVICE, SYSTÈME DE FOURNITURE DE SERVICE ET PROCÉDÉ MANDATAIRE DE SERVICE

(30) Priority: 28.08.2023 JP 2023138077
(43) Date of publication of application: 05.03.2025
(73) Proprietor: Yazaki Corporation, Tokyo 108-0075 (JP)
(72) Inventor: Aiso, Hiroyuki, Susono-shi, Shizuoka 410-1194 (JP)
(74) Representative: Grünecker Patent- und Rechtsanwälte PartG mbB

(56) References cited:
- KULANDAIVEL SEKAR ET AL: "CANvas: Fast and Inexpensive Automotive Network Mapping", 16 August 2019 (2019-08-16), XP093235259, Retrieved from the Internet <URL:https://www.usenix.org/system/files/sec19-kulandaivel.pdf>

## Description

### TECHNICAL FIELD

The disclosure relates to a service proxy device, a service providing system, and a service proxy method.

### BACKGROUND

Japanese Patent Laid-Open Publication No. 2021-064827 discloses a conversion device that converts data of a signal communication ECU (Electronic Control Unit) into data of a service communication ECU based on a conversion map, and conversely converts data of the service communication ECU into data of the signal communication ECU.

Here, when the conversion device detects that at least one of the signal communication ECU and the service communication ECU has been updated, the conversion device automatically updates the conversion map to change the manner of data conversion. Document Kulandaivel Sekar ET AL: "CANvas: Fast and Inexpensive Automotive Network Mapping",, 16 August 2019 (2019-08-16), XP093235259,Retrieved from the Internet:URL:https:// www.usenix.org/system/files/sec19-kulandaivel.pdf discloses an example of automotive network mapping.

### SUMMARY OF THE INVENTION

According to the conversion device disclosed in Japanese Patent Laid-Open Publication No. 2021-064827, the conversion map is automatically updated based on the similarity of data. When a new service is to be supported, there is a possibility that the conversion map cannot be updated because there is no similar data. Furthermore, there is a problem that the conversion device cannot support a service that issues an operation instruction to the signal communication ECU.

The disclosure has been made in view of such problems of the conventional art. An object of the disclosure is to provide a service proxy device, a service providing system, and a service proxy method that can update a conversion map even when a new service is provided and can handle a service that issues an operation instruction to a signal communication ECU.

A service proxy device according to an aspect of the disclosure is recited in claim 1.

A service providing system according to an aspect of the disclosure includes the client, the server, and the above-mentioned service proxy device.

A service proxy method according to an aspect of the disclosure is recited in claim 5.

According to the disclosure, it is possible to provide a service proxy device, a service providing system, and a service proxy method that can update a conversion map even when a new service is provided and can handle a service that issues an operation instruction to a signal communication ECU.

### BRIEF DESCRIPTION OF DRAWINGS

FIG. 1 is a block diagram showing a configuration of a service providing system according to an embodiment.
FIG. 2 is a block diagram showing a configuration of a service proxy device according to the embodiment.
FIG. 3 is a diagram showing an example of a map table.
FIG. 4 illustrates an example of a server management table.
FIG. 5 illustrates an example of a client management table.
FIG. 6A is a sequence chart illustrating a process at the time of startup.
FIG. 6B is a flowchart illustrating a process at the time of startup.
FIG. 7A is a sequence chart illustrating a process for responding to a service inquiry.
FIG. 7B is a flowchart illustrating a process for responding to a service inquiry.
FIG. 8A is a sequence chart illustrating a normal process.
FIG. 8B is a flowchart illustrating a normal process.
FIG. 9A is a sequence chart illustrating a process during service proxy.
FIG. 9B is a flowchart illustrating a process during service proxy.
FIG. 9C is a flowchart illustrating an acquisition process.
FIG. 9D is a flowchart illustrating an execution process.

### DETAILED DESCRIPTION OF THE INVENTION

Hereinafter, a service proxy device, a service providing system, and a service proxy method according to embodiments will be described in detail with reference to the drawings. Note that the dimensional ratio of the drawings is exaggerated for the sake of explanation and may differ from the actual ratio. Further, the same functions and elements are denoted by the same or similar reference numerals, and a description thereof will be omitted as appropriate.

### [Configuration example of service providing system]

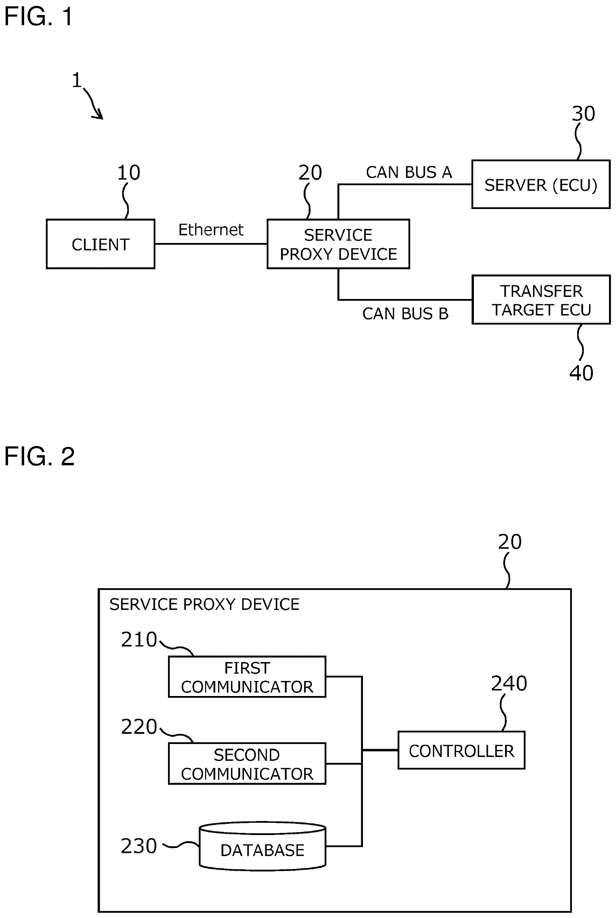

FIG. 1 is a block diagram showing a configuration of a service providing system according to an embodiment. The service providing system 1 includes a client 10, a server 30 (ECU: Electronic Control Unit), and a service proxy device 20, which will be described later. In addition, the service providing system 1 may include a transfer target ECU 40. For example, the service providing system 1 is mounted on a vehicle.

The client 10 and the service proxy device 20 are connected to each other so that data can be transmitted and received via a first communication. For example, the first communication is a service communication. The service communication is a communication method for transmitting and receiving data between a client and a server. An example of a network that realizes the service communication is the Ethernet.

The server 30 and the service proxy device 20 are connected to each other so that data can be transmitted and received by a second communication. The transfer target ECU 40 and the service proxy device 20 are connected to each other so that data can be transmitted and received by the second communication. For example, the second communication is a signal communication. The signal communication is a communication method for broadcasting data to ECUs (including the server 30 and the transfer target ECU 40) on a network. A CAN (Controller Area Network) bus is an example of a network that realizes the signal communication. FIG. 2 shows a state in which a CAN bus A is provided between the server 30 and the service proxy device 20, and a CAN bus B is provided between the transfer target ECU 40 and the service proxy device 20.

### [Configuration example of service proxy device]

FIG. 2 is a block diagram showing a configuration of a service proxy device according to the embodiment. The service proxy device 20 includes a first communicator 210, a second communicator 220, a database 230, and a controller 240. The first communicator 210 is connected to the client 10 via the first communication. The second communicator 220 is connected to the server 30 and the transfer target ECU 40 via the second communication.

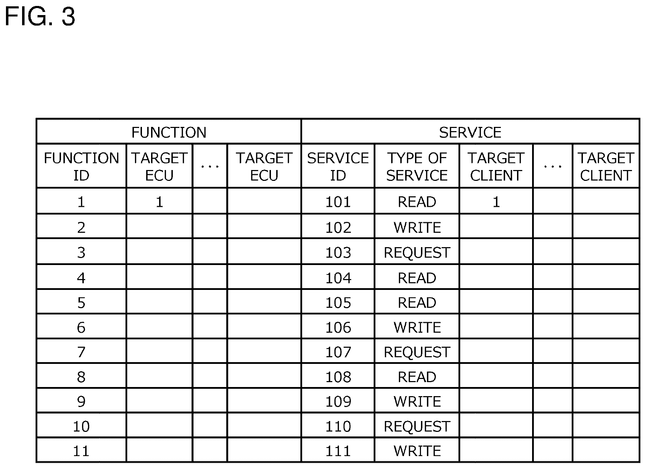

The database 230 stores a map table that associates functions with services and identifies the server 30 that has the functions and the client 10 that requests the service. FIG. 3 is a diagram showing an example of a map table. As shown in Fig. 3, the map table associates a function ID that identifies the function with a service ID that identifies the service. Furthermore, the map table may associate information that identifies the type of service with each service ID.

The map table may also associate, for each function ID, an ECU ID that identifies the server 30 having the function identified by the function ID. Furthermore, the map table may associate, for each service ID, a client ID that identifies the client 10 that requests the service ID.

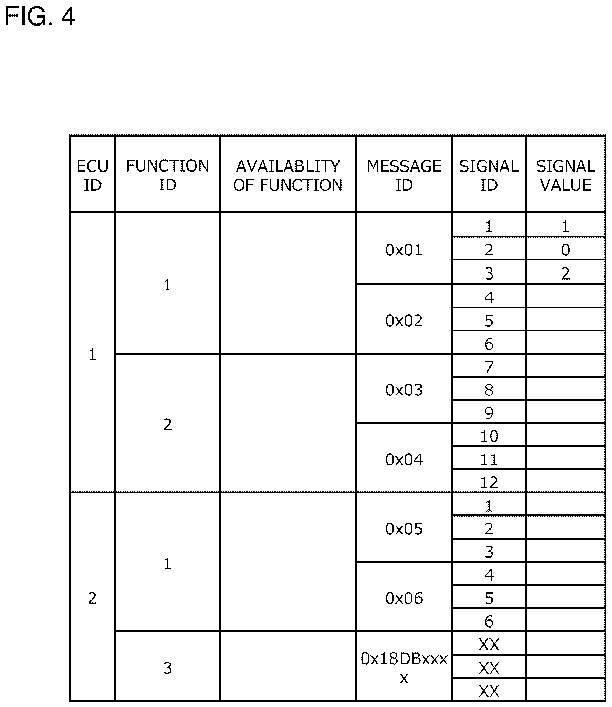

The database 230 may also store a server management table that associates the function with the server 30 and identifies whether the function in the server 30 is available. FIG. 4 illustrates an example of a server management table. The server management table associates information that identifies whether the function in the server 30 is available with an ECU ID that identifies the server 30. The server management table may also associate a message ID that identifies a message transmitted or received in the function with the function ID that identifies the function. The server management table may also associate, for each message ID, a signal ID that indicates a transfer destination of the message identified by the message ID, and a signal value. Here, the signal value corresponds to the execution result of the function in the server 30.

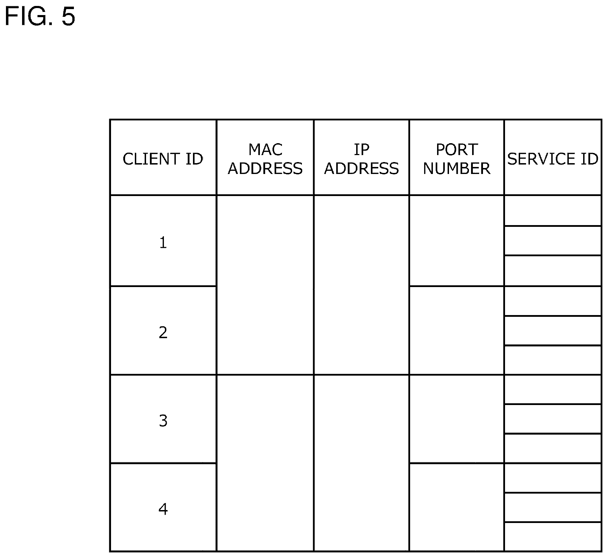

The database 230 may also store a client management table that identifies the service requested by the client 10 by associating the client 10 with the service. FIG. 5 illustrates an example of a client management table. The client management table associates the service ID that identifies the service requested by the client 10 with the client ID that identifies the client 10. Additionally, the client management table may associate connection destination information required for service communication with the client 10 with the client ID. For example, the client management table may associate a MAC address, an IP address, a port number, etc. as the connection destination information.

The controller 240 is a general-purpose computer equipped with a CPU (Central Processing Unit), a memory, a storage device, an input/output unit, etc. A computer program for functioning as a part of the service proxy device 20 is installed in the controller 240. The computer program may be stored in a recording medium that can be read and written by a computer. The computer program may be capable of being distributed through a network.

The controller 240 receives a service execution instruction requesting execution of the service from the client 10 via the first communicator 210. The controller 240 receives the execution result of the function associated with the service from the server 30 via the second communicator 220. Then, the controller 240 transmits the execution result of the function associated with the service to the client 10 via the first communicator 210 based on the service execution instruction and the map table.

Furthermore, the controller 240 may transmit a function check instruction for checking whether or not the function is available to the server 30 via the second communicator 220 and may receive answer data transmitted from the server 30 based on the function check instruction. The controller 240 may then update the server management table based on the received answer data. More specifically, the controller 240 updates information identifying whether or not a function is available to the server 30, which is stored in the server management table, based on the answer data.

The controller 240 may determine whether or not the function associated with the service related to the service execution instruction is available based on the server management table, and may transmit the execution result to the client 10 when it is determined that the function is available. The controller 240 may also receive the execution result from the server 30 via the first communicator 210 and may update the server management table by associating the function with the execution result.

The controller 240 may send a function execution instruction to the server 30 having the function, requesting the execution of the function associated with the service related to the service execution instruction, and may receive the execution result based on the function execution instruction from the server 30.

Furthermore, the controller 240 may receive a service check instruction for checking the presence or absence of the service from the client 10 via the first communicator 210. The controller 240 may then determine whether or not the function corresponding to the service exists based on the service check instruction and the map table. If the function corresponding to the service exists, the controller 240 may update the client management table and the map table based on the service check instruction.

In addition, the controller 240 may transfer a message received from the server 30 via the second communicator 220 to the transfer target ECU 40 identified by the signal ID indicating the transfer destination of the message. The controller 240 may update the server management table based on the message received from the server 30.

### [Procedure at time of startup]

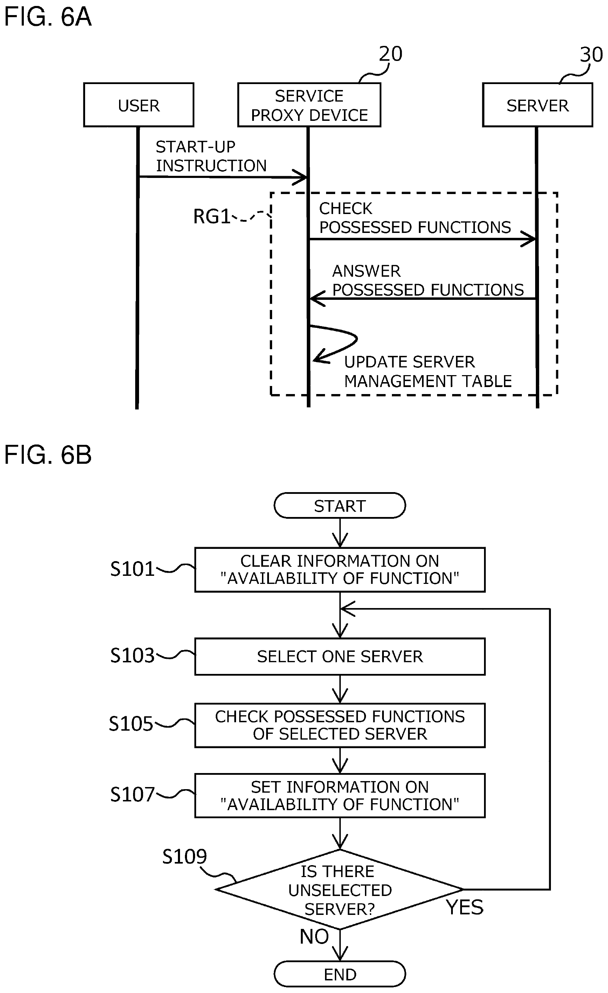

FIG. 6A is a sequence chart illustrating a process at the time of startup. As shown in FIG 6A, the service proxy device 20 starts the process included in the range RG1 based on a start-up instruction from the user.

More specifically, the service proxy device 20 transmits the function check instruction to server 30 to check the functions possessed by the server 30 ("Check possessed functions"). When the server 30 receives the function check instruction, the server 30 transmits the answer data identifying the functions possessed by the server 30 itself to the service proxy device 20 ("Answer possessed functions"). The service proxy device 20 updates the server management table based on the answer data ("Update server management table").

The processes included in the above-mentioned range RG1 are executed for each server 30 connected to the service proxy device 20.

FIG. 6B is a flowchart illustrating a process at the time of startup. In step S101, the controller 240 clears the information on "availability of function" contained in the server management table.

In step S103, the controller 240 selects one server 30 from among the unselected servers 30.

In step S105, the controller 240 checks the possessed functions of the selected server 30. Specifically, the controller 240 transmits the function check instruction to the selected server 30 via the second communicator 220. Thereafter, the controller 240 receives the answer data from the selected server 30.

In step S107, the controller 240 sets the information on "availability of function" that identifies whether or not the function held by the selected server 30 can be used, based on the answer data.

In step S109, the controller 240 determines whether or not there is an unselected server 30. If there is an unselected server 30 (YES in step S109), the process returns to step S103.

If there is no unselected server 30 (NO in step S109), service proxy device 20 ends the process at the time of startup.

### [Procedure for responding to service inquiry]

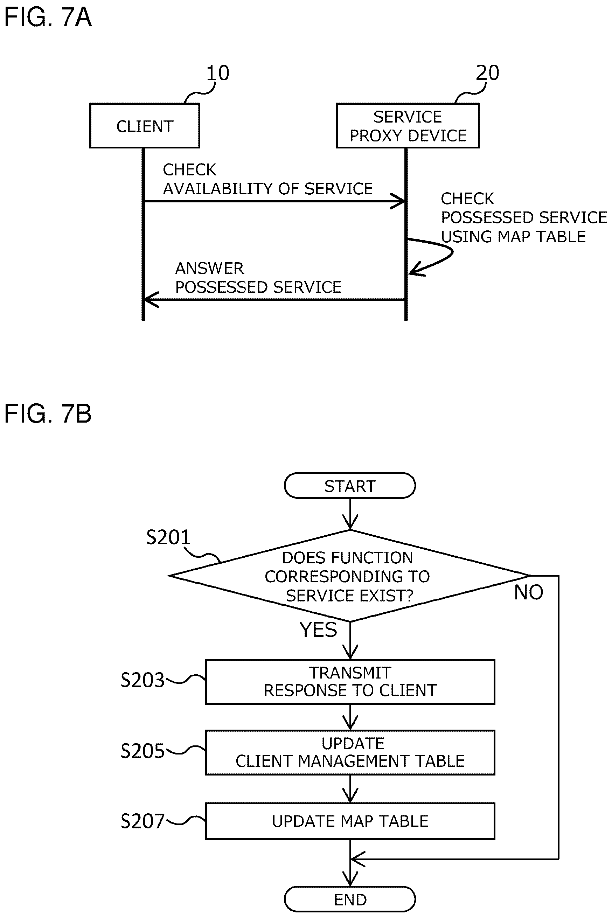

FIG. 7A is a sequence chart illustrating a process for responding to a service inquiry. As shown in FIG. 7A, the service proxy device 20 receives the service check instruction for checking the presence or absence of the service from the client ("Check availability of service"). The service proxy device 20 determines whether or not the function corresponding to the service exists based on the service check instruction and the map table ("Check possessed service using map table"). The service proxy device 20 then transmits the determination result of whether or not the function corresponding to the service exists to the client 10 ("Answer possessed service").

FIG. 7B is a flowchart illustrating a process for responding to a service inquiry. In step S201, the controller 240 determines whether or not the function corresponding to the service exists based on the service check instruction and the map table.

If there is no function corresponding to the service (NO in step S201), the service proxy device 20 ends the process for responding to the service inquiry.

If the function corresponding to the service exists (YES in step S201), in step S203, the controller 240 transmits a response to the client 10 via the first communicator 210 indicating that the function corresponding to the service exists.

In step S205, the controller 240 updates the client management table based on the service check instruction. Specifically, the controller 240 associates the service ID that identifies the service requested by the client 10 with the client ID that identifies the client 10.

In step S207, the controller 240 updates the map table based on the service check instruction. Specifically, the controller 240 associates the client ID that identifies the client 10 that requests the service ID for each service ID. Thereafter, the service proxy device 20 ends the process for responding to the service inquiry.

The process for responding to the service inquiry shown in FIGS. 7A and 7B may be repeatedly executed after the process at the time of startup shown in FIGS. 6A and 6B.

### [Procedure at normal]

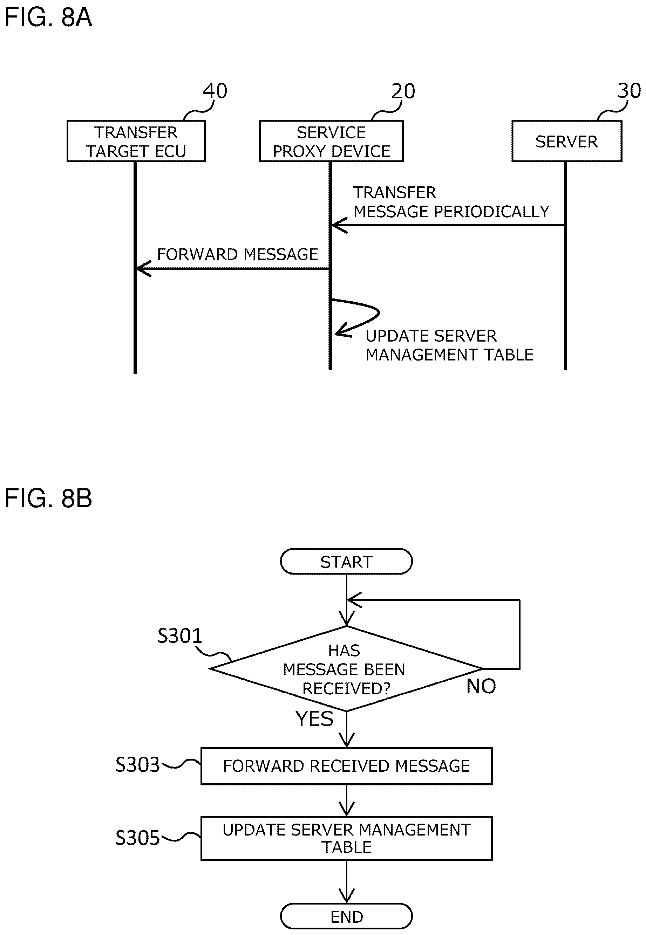

FIG. 8A is a sequence chart illustrating a normal process. As shown in FIG. 8A, the service proxy device 20 receives a message transmitted from the server 30 ("Transfer message periodically"), and then transfers the received message to the transfer target ECU 40 ("Forward message"). Then, the service proxy device 20 updates the server management table based on the received message ("Update server management table").

FIG. 8B is a flowchart illustrating a normal process. In step S301, the controller 240 determines whether or not the message has been received from the server 30.

If no message has been received (NO in step S301), the process returns to step S301.

When a message has been received (YES in step S301), in step S303, the controller 240 forwards the received message to the transfer target ECU 40 via the second communicator 220.

In step S305, the controller 240 updates the server management table based on the received message. Specifically, the controller 240 associates the function ID that identifies the function with the message ID that identifies the message sent or received in the function. Additionally, the controller 240 may associate the signal ID and the signal value with each message ID, wherein the signal ID indicates the transfer destination of the message identified by the message ID. Thereafter, the service proxy device 20 ends the normal process.

The normal process shown in FIGS. 8A and 8B may be repeatedly executed after the process at the time of startup shown in FIGS. 6A and 6B.

### [Procedure during service proxy]

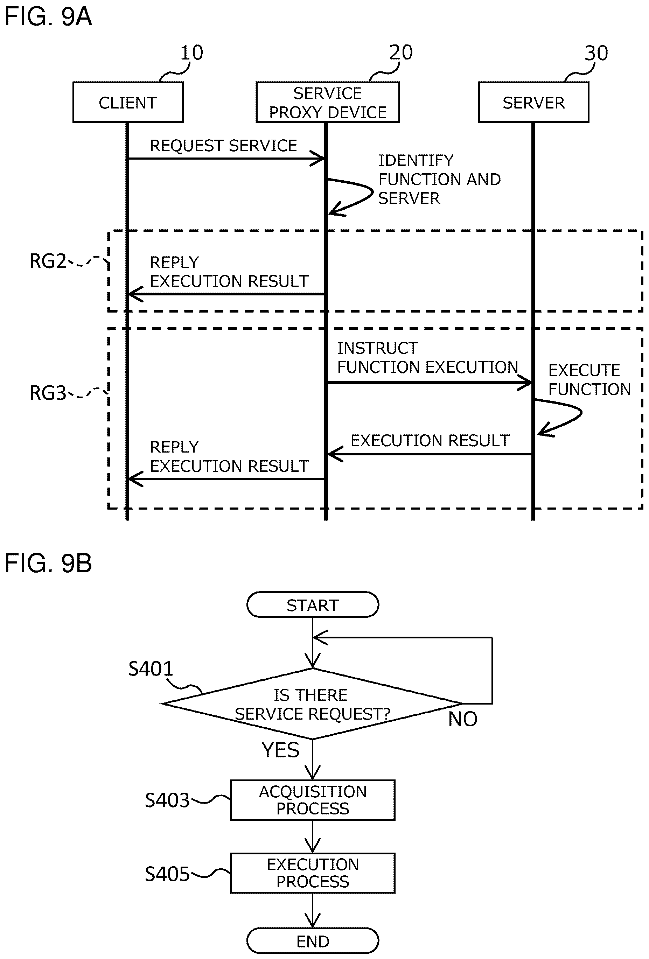

FIG. 9A is a sequence chart illustrating a process during service proxy. As shown in FIG. 9A, the service proxy device 20 receives the service execution instruction sent from the client 10 ("Request service"). Based on the service execution instruction, the service proxy device 20 identifies the function associated with the service identified by the service execution instruction and the server 30 having the function ("Identify function and server").

If the execution result is registered in the map data, service proxy device 20 performs process in the range RG2. Specifically, the service proxy device 20 transmits the execution result to client 10 ("Reply execution result").

If the execution result is not registered in the map data and it is necessary to obtain the execution result, the service proxy device 20 performs process in the range RG3.

Specifically, the service proxy device 20 transmits the function execution instruction to the server 30 ("Instruct function execution"). The server 30, which has received the function execution instruction, executes the function identified by the function execution instruction and transmits the execution result to the service proxy device 20 ("execution result"). Then, the service proxy device 20 transmits the execution result to the client 10 ("Reply execution result").

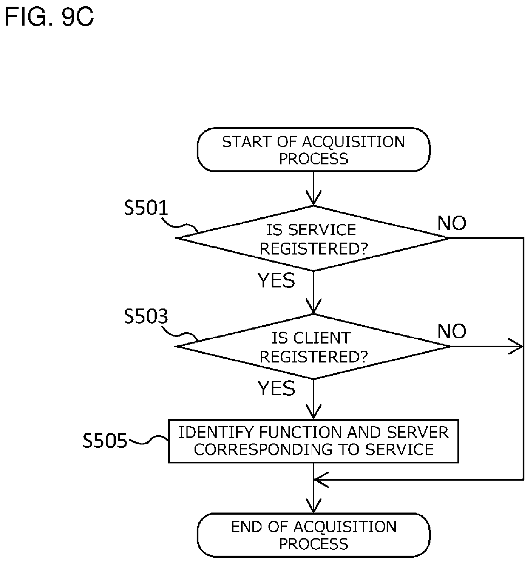

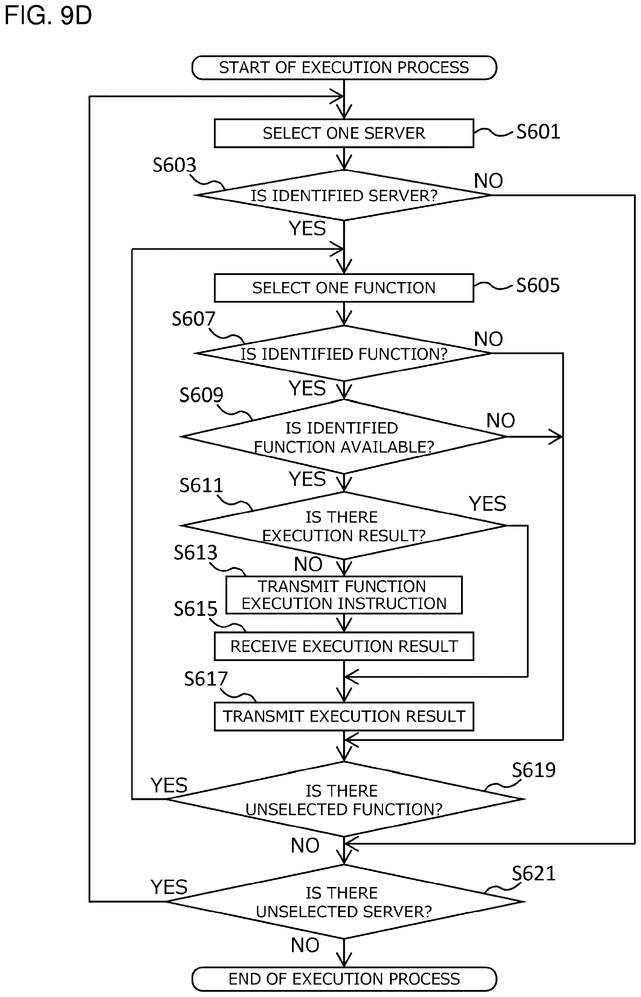

FIG. 9B is a flowchart illustrating a process during service proxy. FIG. 9C is a flowchart illustrating an acquisition process. FIG. 9D is a flowchart illustrating an execution process.

In step S401, the controller 240 determines whether or not the service request has been made by the client 10. Specifically, the controller 240 determines whether or not the service execution instruction has been received from the client 10.

If there is no service request (NO in step S401), the process returns to step S401.

If the service request has been received (YES in step S401), the controller 240 executes an acquisition process in step S403. The details of the acquisition process will be described with reference to FIG. 9C.

In step S405, the controller 240 executes an execution process. The details of the execution process will be described with reference to FIG. 9D.

Thereafter, the service proxy device 20 ends the process during service proxy.

FIG. 9C is a flowchart illustrating an acquisition process. In step S501, the controller 240 determines whether or not the service identified by the service execution instruction is registered. Specifically, the controller 240 determines whether or not the service is registered in the map table.

If the service is not registered (NO in step S501), the acquisition process is terminated. On the other hand, if the service is registered (YES in step S501), in step S503, the controller 240 determines whether or not the client is registered in association with the service. Specifically, the controller 240 refers to the map table and determines whether or not the client that transmitted the service execution instruction is associated with the service identified by the service execution instruction.

If the client is not registered (NO in step S503), the acquisition process ends. On the other hand, if the client is registered (YES in step S503), in step S505, the controller 240 refers to the map table to identify the function and server corresponding to the service. Then, the acquisition process ends.

FIG. 9D is a flowchart illustrating an execution process. In step S601, the controller 240 selects one server 30 from among the servers 30 that have not been selected.

In step S603, the controller 240 determines whether the selected server is the server 30 identified in the acquisition process.

If the selected server is not the identified server 30 (NO in step S603), the process proceeds to step S621.

On the other hand, if the selected server is the identified server 30 (YES in step S603), in step S605, the controller 240 selects one function from among the unselected functions.

In step S607, the controller 240 determines whether the selected function is the function identified in the acquisition process.

If the selected function is not the identified function (NO in step S607), the process proceeds to step S619.

On the other hand, if the selected function is the identified function (YES in step S607), in step S609, the controller 240 determines whether or not the identified function is available in the identified server 30. Specifically, the controller 240 refers to the server management table to determine whether or not the function is available.

If the function is not available (NO in step S609), the process proceeds to step S619.

On the other hand, if the function is available (YES in step S609), in step S611, the controller 240 determines whether or not there is the execution result that takes into consideration the identified function in the identified server 30. Specifically, the controller 240 refers to the server management table and determines whether or not the execution result is registered.

If there is the execution result (YES in step S611), the process proceeds to step S617. On the other hand, if there is no execution result (NO in step S611), the controller 240 transmits the function execution instruction to the identified server 30 in step S613.

Thereafter, in step S615, the controller 240 receives the execution result from the server 30.

In step S617, the controller 240 transmits the execution result to the client 10.

In step S619, the controller 240 determines whether or not there is the unselected function. If there is the unselected function (YES in step S619), the process returns to step S605.

If there is no unselected function (NO in step S619), in step S621, the controller 240 determines whether or not there is the unselected server 30. If there is the unselected server 30 (YES in step S621), the process returns to step S601.

If there is no unselected server 30 (NO in step S621), the service proxy device 20 ends the execution process.

The process during service proxy shown in FIGS. 9A to 9D may be repeatedly executed after the process at the time of startup shown in FIGS. 6A and 6B.

### [Effects of the embodiments]

As explained in detail above, a service proxy device according to the present embodiment includes a first communicator connected to a client via a first communication, a second communicator connected to a server via a second communication, a database, and a controller. The database is configured to store a map table that associates functions with services and identifies a server having the function and a client requesting the service. The controller is configured to receive a service execution instruction from the client via the first communicator, which requests the execution of the service. The controller is configured to receive an execution result of the function associated with the service from the server via the second communicator. The controller is configured to transmit the execution result of the function associated with the service to the client via the first communicator based on the service execution instruction and the map table.

This allows a conversion map to be updated when supporting new services, and it possible to support services that provide operational instructions in signal communication. Also, communication is possible across different communication methods between clients and servers, making it possible to provide a variety of services without changing the communication method of existing servers. As a result, it is possible to reduce the cost and workload during design and manufacturing of a system in which communication occurs between clients and servers. Furthermore, user convenience is improved.

Further, in the service proxy device according to the present embodiment, the database may store a server management table that identifies whether the function is available or not in association with the server. Via the second communicator, the controller may transmit a function check instruction to the server to check whether the function is available, and may receive an answer data transmitted from the server based on the function check instruction. The controller may update the server management table based on the answer data. This allows the service proxy device to centrally manage functions available on the server, and makes it easy to determine whether the service can be provided.

Furthermore, in the service proxy device according to the present embodiment, the controller may determine whether the function associated with the service related to the service execution instruction is available based on the server management table. The controller may transmit the execution result to the client in a case of determining that the function is available. This allows the client to be notified of whether or not the requested service can be provided using the server connected to the service proxy device. As a result, user convenience is improved.

Further, in the service proxy device according to the present embodiment, the controller may receive the execution result from the server via the first communicator, and may update the server management table by associating the function with the execution result. This allows the service proxy device to centrally manage the execution results of the function on the server. For example, for a function that is periodically executed on the server, the execution results periodically transmitted can be centrally managed by the service proxy device.

Furthermore, in the service proxy device according to the present embodiment, the controller may transmit a function execution instruction to the server that has the function, the function execution instruction requesting execution of the function associated with the service related to the service execution instruction. The controller may receive, from the server, the execution result based on the function execution instruction. This allows the function related to the requested service to be executed in the server, and the requested service to be provided. As a result, user convenience is improved.

Further, in the service proxy device according to the present embodiment, the database may store a client management table that identifies the service requested by the client in association with the client. The controller may receive a service check instruction for checking presence or absence of the service from the client via the first communicator. The controller may determine whether the function corresponding to the service exists based on the service check instruction and the map table. The controller may update the client management table and the map table based on the service check instruction if the function corresponding to the service exists. This allows the service requested by the client to be linked with the function provided by the server and managed in a centralized manner. As a result, it becomes possible to easily determine whether or not a service can be provided.

A service providing system according to the present embodiment includes the client, the server, and the above-mentioned service proxy device. This allows a conversion map to be updated when supporting new services, and it possible to support services that provide operational instructions in signal communication.

A service proxy method according to the present embodiment, relates to a service proxy device including a first communicator connected to a client via a first communication, a second communicator connected to a server via a second communication, a database, and a controller. The database is configured to store a map table that associates functions with services and identifies a server having the function and a client requesting the service. The controller is configured to receive a service execution instruction from the client via the first communicator, which requests the execution of the service. The controller is configured to receive an execution result of the function associated with the service from the server via the second communicator. The controller is configured to transmit the execution result of the function associated with the service to the client via the first communicator based on the service execution instruction and the map table.

This allows a conversion map to be updated when supporting new services, and it possible to support services that provide operational instructions in signal communication.

Respective functions described in the above embodiment may be implemented by one or plural processing circuits. The processing circuits include programmed processors, electrical circuits, etc., as well as devices such as application specific integrated circuits (ASIC) and circuit components arranged to perform the described functions, etc.

Although the present invention has been described above by reference to the embodiment, the present invention is not limited to those and the configuration of parts can be replaced with any configuration having a similar function, as long as they lie within the scope of the claims.

## Claims

1. A service proxy device (20) comprising
a first communicator (210) connected to a client (10) via a first communication,
a second communicator (220) connected to a server (30) via a second communication,
a database (230), and
a controller (240), wherein
the database (230) is configured to
store a map table that associates functions with services and identifies the server (30) having the function and the client (10) requesting the service,
the controller (240) is configured to
receive, via the first communicator (210), a service execution instruction requesting execution of the service from the client (10),
transmit a function execution instruction to the server (30) that has the function, the function execution instruction requesting execution of the function associated with the service related to the service execution instruction, and
receive, from the server (30), via the second communicator (220), the execution result of the function, based on the function execution instruction, and
transmit, via the first communicator (210), the execution result of the function associated with the service based on the service execution instruction and the map table, to the client (10), wherein
the database (230) is configured to
store a server management table that identifies whether the function is available or not in association with the server (30), and
store a client management table that identifies the service requested by the client (10) in association with the client (10),
the controller (240) is configured to, via the second communicator (220),
transmit a function check instruction to the server (30) to check whether the function is available,
receive an answer data transmitted from the server (30) based on the function check instruction, and
update the server management table based on the answer data,
the controller (240) is further configured to
receive a service check instruction for checking presence or absence of the service from the client (10) via the first communicator (210),
determine whether the function corresponding to the service exists based on the service check instruction and the map table, and
update the client management table and the map table based on the service check instruction if the function corresponding to the service exists.

2. The service proxy device (20) according to claim 1, wherein
the controller (240) is configured to
determine whether the function associated with the service related to the service execution instruction is available based on the server management table, and
transmit the execution result to the client (10) in a case of determining that the function is available.

3. The service proxy device (20) according to claim 1 or 2, wherein
the controller (240) is configured to
receive the execution result from the server (30) via the first communicator (210), and
update the server management table by associating the function with the execution result.

4. A service providing system (1) comprising
a client (10),
a server (30), and
a service proxy device (20) according to any of claims 1 to 3.

5. A service proxy method for a service proxy device (20) including a first communicator (210) connected to a client (10) via a first communication, a second communicator (220) connected to a server (30) via a second communication, a database (230), and a controller (240),
the service proxy method comprising,
storing, in the database (230), a map table that associates functions with services and identifies the server (30) having the function and the client (10) requesting the service,
storing, in the database (230), a server management table that identifies whether the function is available or not in association with the server (30), and
storing, in the database (230), a client management table that identifies the service requested by the client (10) in association with the client (10),
by the controller (240),
determining, whether, via the first communicator (210), a service execution instruction requesting execution of the service from the client (10), has been received,
transmitting a function execution instruction to the server (30) that has the function, the function execution instruction requesting execution of the function associated with the service related to the service execution instruction,
receiving, via the second communicator (220), the execution result of the function based on the function execution instruction from the server (30), and
transmitting, via the first communicator (210), the execution result of the function associated with the service based on the service execution instruction and the map table, to the client (10),
transmitting, via the second communicator (220), a function check instruction to the server (30) to check whether the function is available,
receiving, via the second communicator (220), an answer data transmitted from the server (30) based on the function check instruction, and
updating, via the second communicator (220), the server management table based on the answer data,
receiving a service check instruction for checking presence or absence of the service from the client (10) via the first communicator (210),
determining whether the function corresponding to the service exists based on the service check instruction and the map table, and
updating the client management table and the map table based on the service check instruction if the function corresponding to the service exists.

## Patentansprüche

1. Eine Dienst-Proxy-Einrichtung (20), die aufweist
einen ersten Kommunikator (210), der über eine erste Verbindung mit einem Client (10) verbunden ist,
einen zweiten Kommunikator (220), der über eine zweite Verbindung mit einem Server (30) verbunden ist,
eine Datenbank (230), und
eine Steuereinheit (240), wobei
die Datenbank (230) konfiguriert ist, um
eine Zuordnungstabelle zu speichern, die Funktionen mit Diensten verknüpft und den Server (30), der die Funktion hat, und den Client (10), der den Dienst anfordert, identifiziert,
die Steuereinheit (240) so konfiguriert ist, dass sie
über den ersten Kommunikator (210) eine Dienstausführungsinstruktion zu empfangen, die die Ausführung des Dienstes von dem Client (10) anfordert,
eine Funktionsausführungsanweisung an den Server (30) zu übertragen, der die Funktion hat, wobei die Funktionsausführungsanweisung die Ausführung der Funktion anfordert, die mit dem Dienst verbunden ist, der sich auf die Dienstausführungsanweisung bezieht, und
von dem Server (30) über den zweiten Kommunikator (220) das Ausführungsergebnis der Funktion, basierend auf der Funktionsausführungsanweisung, zu empfangen, und
das Ausführungsergebnis der Funktion, die mit dem Dienst verbunden ist, basierend auf der Dienstausführungsinstruktion und der Zuordnungstabelle, über den ersten Kommunikator (210) an den Client (10) zu übertragen, wobei
die Datenbank (230) konfiguriert ist, um
eine Serververwaltungstabelle zu speichern, die identifiziert, ob die Funktion in Verbindung mit dem Server (30) verfügbar ist oder nicht, und
eine Client-Verwaltungstabelle zu speichern, die den von dem Client (10) angeforderten Dienst in Verbindung mit dem Client (10) identifiziert,
die Steuereinheit (240) so konfiguriert ist, dass sie über die zweite Kommunikationseinrichtung (220)
eine Funktionsprüfungsanweisung an den Server (30) zu übertragen, um zu prüfen, ob die Funktion verfügbar ist,
Empfangen von Antwortdaten, die von dem Server (30) übertragen wurden, basierend auf der Funktionsprüfungsanweisung, und
Aktualisieren der Server-Verwaltungstabelle auf der Basis der Antwortdaten,
die Steuereinheit (240) ist ferner konfiguriert, um
Empfangen einer Dienstprüfungsanweisung zum Prüfen des Vorhandenseins oder Nichtvorhandenseins des Dienstes von dem Client (10) über den ersten Kommunikator (210),
auf der Grundlage der Dienstprüfungsanweisung und der Kartentabelle zu bestimmen, ob die dem Dienst entsprechende Funktion existiert, und
Aktualisieren der Client-Verwaltungstabelle und der Abbildungstabelle auf der Grundlage der Dienstprüfungsanweisung, wenn die dem Dienst entsprechende Funktion existiert.

2. Die Dienst-Proxy-Einrichtung (20) nach Anspruch 1, wobei
die Steuereinheit (240) konfiguriert ist, um
zu bestimmen, ob die Funktion, die mit dem Dienst verbunden ist, der sich auf die Dienstausführungsinstruktion bezieht, basierend auf der Serververwaltungstabelle verfügbar ist, und
das Ausführungsergebnis an den Client (10) zu übermitteln, wenn bestimmt wird, dass die Funktion verfügbar ist.

3. Die Dienst-Proxy-Einrichtung (20) nach Anspruch 1 oder 2, wobei
die Steuereinheit (240) konfiguriert ist, um
das Ausführungsergebnis von dem Server (30) über den ersten Kommunikator (210) zu empfangen, und
die Server-Verwaltungstabelle zu aktualisieren, indem die Funktion mit dem Ausführungsergebnis verknüpft wird.

4. Ein Dienstbereitstellungssystem (1), das Folgendes aufweist
einen Client (10),
einen Server (30), und
eine Dienst-Proxy-Einrichtung (20) nach einem der Ansprüche 1 bis 3.

5. Ein Dienst-Proxy-Verfahren für eine Dienst-Proxy-Einrichtung (20), die eine erste Kommunikationseinrichtung (210), die mit einem Client (10) über eine erste Kommunikation verbunden ist, eine zweite Kommunikationseinrichtung (220), die mit einem Server (30) über eine zweite Kommunikation verbunden ist, eine Datenbank (230) und eine Steuereinheit (240) aufweist,
das Verfahren weist auf,
Speichern einer Zuordnungstabelle in der Datenbank (230), die Funktionen mit Diensten verknüpft und den Server (30), der die Funktion hat, und den Client (10), der den Dienst anfordert, identifiziert,
Speichern, in der Datenbank (230), einer Server-Verwaltungstabelle, die identifiziert, ob die Funktion in Verbindung mit dem Server (30) verfügbar ist oder nicht, und
Speichern, in der Datenbank (230), einer Client-Verwaltungstabelle, die den vom Client (10) angeforderten Dienst in Verbindung mit dem Client (10) identifiziert,
durch die Steuereinheit (240),
Bestimmen, ob über den ersten Kommunikator (210) eine Dienstausführungsinstruktion, die die Ausführung des Dienstes von dem Client (10) anfordert, empfangen wurde,
Senden einer Funktionsausführungsanweisung an den Server (30), der die Funktion hat, wobei die Funktionsausführungsanweisung die Ausführung der Funktion anfordert, die mit dem Dienst verbunden ist, der sich auf die Dienstausführungsanweisung bezieht,
Empfangen des Ausführungsergebnisses der Funktion auf der Basis der Funktionsausführungsanweisung von dem Server (30) über den zweiten Kommunikator (220), und
Übertragen des Ausführungsergebnisses der Funktion, die dem Dienst zugeordnet ist, basierend auf der Dienstausführungsinstruktion und der Zuordnungstabelle, über die erste Kommunikationseinrichtung (210) an den Client (10),
Übertragen einer Funktionsprüfungsanweisung über den zweiten Kommunikator (220) an den Server (30), um zu prüfen, ob die Funktion verfügbar ist,
Empfangen, über den zweiten Kommunikator (220), von Antwortdaten, die von dem Server (30) übertragen wurden, basierend auf der Funktionsprüfungsanweisung, und
Aktualisieren, über den zweiten Kommunikator (220), der Server-Verwaltungstabelle auf der Grundlage der Antwortdaten,
Empfangen einer Dienstprüfungsanweisung zum Prüfen des Vorhandenseins oder Nichtvorhandenseins des Dienstes von dem Client (10) über den ersten Kommunikator (210),
Bestimmen, ob die dem Dienst entsprechende Funktion existiert, basierend auf der Dienstprüfungsanweisung und der Kartentabelle, und
Aktualisieren der Client-Verwaltungstabelle und der Abbildungstabelle auf der Grundlage der Dienstprüfungsanweisung, wenn die dem Dienst entsprechende Funktion existiert.

## Revendications

1. Dispositif mandataire de service (20) comprenant
un premier dispositif de communication (210) connecté à un client (10) par l'intermédiaire d'une première communication,
un second dispositif de communication (220) connecté à un serveur (30) par l'intermédiaire d'une seconde communication,
une base de données (230), et
un dispositif de commande (240), dans lequel
la base de données (230) est configurée pour
stocker une table de correspondance qui associe des fonctions à des services et identifie le serveur (30) disposant de la fonction et le client (10) demandant le service,
le dispositif de commande (240) est configuré pour
recevoir, par l'intermédiaire du premier dispositif de communication (210), une instruction d'exécution de service demandant au client (10) d'exécuter le service,
transmettre une instruction d'exécution de fonction au serveur (30) qui possède la fonction, l'instruction d'exécution de fonction demandant l'exécution de la fonction associée au service lié à l'instruction d'exécution de service, et
recevoir du serveur (30), par l'intermédiaire du second dispositif de communication (220), le résultat de l'exécution de la fonction, sur la base de l'instruction d'exécution de la fonction, et
transmettre au client (10), par l'intermédiaire du premier dispositif de communication (210), le résultat de l'exécution de la fonction associée au service sur la base de l'instruction d'exécution du service et de la table de correspondance, dans lequel
la base de données (230) est configurée pour
stocker un tableau de gestion du serveur qui indique si la fonction est disponible ou non en association avec le serveur (30), et
stocker un tableau de gestion des clients qui identifie le service demandé par le client (10) en association avec le client (10),
le dispositif de commande (240) est configuré pour, par l'intermédiaire du second dispositif de communication (220),
transmettre une instruction de commande de fonction au serveur (30) pour vérifier si la fonction est disponible,
recevoir une réponse transmise par le serveur (30) sur la base de l'instruction de vérification de la fonction, et
mettre à jour le tableau de gestion des serveurs sur la base des données de réponse,
le dispositif de commande (240) est en outre configuré pour
recevoir du client (10), par l'intermédiaire du premier dispositif de communication (210), une instruction de vérification de la présence ou de l'absence du service,
déterminer si la fonction correspondant au service existe sur la base de l'instruction de commande de service et de la table de correspondance, et
mettre à jour la table de gestion des clients et la table de correspondance sur la base de l'instruction de commande de service si la fonction correspondant au service existe.

2. Dispositif mandataire de service (20) selon la revendication 1, dans lequel
le dispositif de commande (240) est configuré pour
déterminer si la fonction associée au service lié à l'instruction d'exécution du service est disponible sur la base du tableau de gestion du serveur, et
transmettre le résultat de l'exécution au client (10) s'il est déterminé que la fonction est disponible.

3. Dispositif mandataire de service (20) selon les revendications 1 ou 2, dans lequel
le dispositif de commande (240) est configuré pour
recevoir le résultat de l'exécution du serveur (30) par l'intermédiaire du premier dispositif de communication (210), et
mettre à jour le tableau de gestion du serveur en associant la fonction au résultat de l'exécution.

4. Système de prestation de services (1) comprenant
un client (10),
un serveur (30), et
un dispositif mandataire de service (20) selon l'une des revendications 1 à 3.

5. Procédé mandataire de service pour un dispositif mandataire de service (20) comprenant un premier dispositif de communication (210) connecté à un client (10) par l'intermédiaire d'une première communication, un second dispositif de communication (220) connecté à un serveur (30) par l'intermédiaire d'une seconde communication, une base de données (230), et un dispositif de commande (240),
le procédé mandataire de service comprenant les opérations suivantes :
stocker, dans la base de données (230), une table de correspondance qui associe les fonctions aux services et identifie le serveur (30) disposant de la fonction et le client (10) demandant le service,
stocker, dans la base de données (230), un tableau de gestion du serveur qui indique si la fonction est disponible ou non en association avec le serveur (30), et
stocker, dans la base de données (230), un tableau de gestion des clients qui identifie le service demandé par le client (10) en association avec le client (10),
par le dispositif de commande (240),
déterminer si le premier dispositif de communication (210) a reçu une instruction d'exécution de service demandant au client (10) d'exécuter le service,
transmettre une instruction d'exécution de fonction au serveur (30) qui possède la fonction, l'instruction d'exécution de fonction demandant l'exécution de la fonction associée au service lié à l'instruction d'exécution de service,
recevoir du serveur (30), par l'intermédiaire du second dispositif de communication (220), le résultat de l'exécution de la fonction sur la base de l'instruction d'exécution de la fonction, et
transmettre au client (10), par l'intermédiaire du premier dispositif de communication (210), le résultat de l'exécution de la fonction associée au service sur la base de l'instruction d'exécution du service et de la table de correspondance,
transmettre, par l'intermédiaire du deuxième dispositif de communication (220), une instruction de vérification de la fonction au serveur (30) afin de vérifier si la fonction est disponible,
recevoir, par l'intermédiaire du second dispositif de communication (220), une réponse transmise par le serveur (30) sur la base de l'instruction de vérification de la fonction, et
mettre à jour, par l'intermédiaire du second dispositif de communication (220), le tableau de gestion du serveur sur la base des données de réponse,
recevoir du client (10), par l'intermédiaire du premier dispositif de communication (210), une instruction de vérification de la présence ou de l'absence du service,
déterminer si la fonction correspondant au service existe sur la base de l'instruction de commande de service et de la table de correspondance, et mettre à jour la table de gestion des clients et la table de correspondance sur la base de l'instruction de commande de service si la fonction correspondant au service existe.
